# EUROPÄISCHE PATENTANMELDUNG

(11) **EP 3 643 458 A2**
(43) Veröffentlichungstag der Anmeldung: **29.04.2020**
(21) Anmeldenummer: 19193837.2
(22) Anmeldetag: 27.08.2019
(51) Int. Cl.: B25J 15/02, B25J 15/00, B25J 15/06

(54) **GREIFVORRICHTUNG ZUM GREIFEN VON METALLBLECHEN**

(30) Priorität: 04.09.2018 DE 102018121568
(71) Anmelder: KUIPERS technologies GmbH, 49716 Meppen (DE)
(72) Erfinder: BORGER, Wolter, 7671 AB Vriezenveen (NL)
(74) Vertreter: Wischmeyer, André

(57) **Zusammenfassung**

Greifvorrichtung (2) zum Greifen von Metallblechen, umfassend einen Greifvorrichtungsrahmen (4), zumindest zwei relativ zueinander beweglich gelagerte Greifelemente (6, 8) sowie eine im Betrieb einen Abstand von einander zugewandten und sich insbesondere zumindest im Wesentlichen parallel zueinander erstreckenden Greifflächen (10, 12) der Greifelemente (6, 8) einstellende Stellvorrichtung (14), wobei die Stellvorrichtung (14) an einem Übersetzungselement (16) angeordnet ist, das an einem ersten Greifelement (6) um eine erste Greifelementschwenkachse (18) schwenkbar gelagert ist sowie Industrieroboter.

## Beschreibung

Die Erfindung betrifft eine Greifvorrichtung zum Greifen von Metallblechen. Die Greifvorrichtung umfasst einen Greifvorrichtungsrahmen und zumindest zwei relativ zueinander beweglich gelagerte Greifelemente. Weiterhin umfasst die Greifvorrichtung eine Stellvorrichtung, die im Betrieb einen Abstand von Greifflächen der Greifelemente einstellt, wobei die Greifflächen einander zugewandt sind und sich insbesondere zumindest im Wesentlichen parallel zueinander erstrecken.

Eine derartige Greifvorrichtung ist unter anderem aus der FR 2971182 B1 bekannt. Darin wird ein Roboter mit zwei Greifelementen gezeigt, wovon eines relativ zu einem Rahmen in Führungsrollen einer Führungsanordnung verschieblich gelagert ist, die in eine Verschieberichtung voneinander beabstandet sind. Eine Rotation einer Ausgangswelle eines am Rahmen befestigten Motors wird über ein Zahnrad zu einer Verschiebung dieses Greifelementes übersetzt.

Nachteilig bei den bekannten Greifvorrichtungen ist zum einen, dass deren räumliche Erstreckung und insbesondere die der Greifelemente eine Positionierung von zu bearbeitenden Metallblechen in Bearbeitungsmaschinen nur sehr eingeschränkt ermöglichen. Des Weiteren führt die Vielzahl an beweglichen Bauteilen zu häufigen Ausfällen der Greifvorrichtungen.

Aufgabe der vorliegenden Erfindung ist die Bereitstellung einer Greifvorrichtung sowie eines Roboters mit einer Greifvorrichtung, die insbesondere beim Greifen eines Bleches einen geringeren Platzbedarf bei einer erhöhten Zuverlässigkeit hat.

Erfindungsgemäß wird die Aufgabe dadurch gelöst, dass die Stellvorrichtung der Greifvorrichtung an einem Übersetzungselement angeordnet ist, das an einem ersten Greifelement um eine erste Greifelementschwenkachse schwenkbar gelagert ist.

Das Übersetzungselement dient zu einer Übersetzung einer von der Stellvorrichtung bereitgestellten Bewegung. Eine Bewegung der Greifflächen der unterschiedlichen Greifelemente aufeinander zu oder voneinander weg wird durch eine von der Stellvorrichtung eingeleitete Schwenkbewegung des Übersetzungselementes relativ zum ersten Greifelement bewirkt. Dazu ist das Übersetzungselement insbesondere über ein Gleitlager mit dem ersten Greifelement gekoppelt. Die gedachte bzw. geometrische erste Greifelementschwenkachse verläuft insbesondere parallel zu zumindest einer der Greifflächen. Aufgrund des Übersetzungselementes kann eine für eine Zug- oder Druckbewegung notwendige Erstreckung raumsparend angeordnet werden. Die Übersetzung ändert insbesondere eine notwendige ursprüngliche Bewegungsrichtung eines Aktors der Stellvorrichtung in eine hierzu angewinkelte Bewegungsrichtung zumindest eines Greifelementes.

Die Greifelemente dienen dazu, Bauteile wie Metallbleche, die sich zumindest teilweise zwischen den Greifflächen befinden, zu greifen. Beim Greifen werden diese Bauteile insbesondere kraftschlüssig geklemmt oder alternativ formschlüssig in die Bauteile eingegriffen. In einer abweichenden Anwendungsform werden die Greifelemente in einen Hohlraum eines Bauteils eingeführt und zum Greifen des Bauteils gespreizt, d.h. voneinander wegbewegt. Auf diese Weise können insbesondere Rohre an ihren Enden durch die Greifvorrichtung gegriffen werden.

Die Greifelemente sind bevorzugt starr und insbesondere zumindest überwiegend aus einem metallischen Werkstoff ausgebildet. Die Greifflächen der Greifelemente sind insbesondere die Teile von der Oberfläche der Greifelemente, welche beim Greifen eines Bauteils an einem Oberflächenabschnitt des Bauteils wie einem Metallblech anliegen und unmittelbar Kontakt dazu haben.

Die Greifflächen sind insbesondere jeweils eben ausgebildet und beim Greifen des Bauteils parallel zueinander angeordnet. Alternativ sind die Greifflächen insbesondere zylindermantelabschnittsförmig. Die Greifflächen werden jeweils bevorzugt durch zumindest eine, insbesondere zwei nicht verbundene Oberflächenabschnitte der Greifelemente gebildet. Bevorzugt sind die Greifelemente relativ zueinander im Wesentlichen translatorisch beweglich, wobei die Greifflächen während ihrer Relativbewegung zueinander um höchstens 10°, insbesondere nicht verschwenkt werden. Zu einer solchen Verschwenkung kommt es insbesondere lediglich aufgrund von Materialelastizitäten bzw. -nachgiebigkeiten der Greifvorrichtungsbestandteile und insbesondere aufgrund von Lagerspiel von zumindest einem Schwenklager, über das die Bestandteile, insbesondere das Übersetzungselement und das erste Greifelement, miteinander gekoppelt sind. Bevorzugt sind die Greifflächen dabei in jeder Stellung der Greifvorrichtung parallel zueinander angeordnet, wobei die Greifelemente zumindest anteilig rechtwinklig zu den Greifflächen relativ zueinander verschoben werden.

Die Stellvorrichtung umfasst insbesondere einen Motor und bevorzugt ein Getriebe zur Übertragung einer Motorbewegung auf zumindest eines der Greifelemente. Bevorzugt ist die Stellvorrichtung unmittelbar an dem Greifelement oder an dem Übersetzungselement angeordnet. Die Stellvorrichtung ist dabei insbesondere an eine Stromversorgung oder an einen Arbeitsfluidkreislauf angeschlossen. Die Stellvorrichtung umfasst vorzugsweise eine Steuerungseinheit, die eine Stellbewegung der Stellvorrichtung steuert.

Bevorzugt umfasst die Greifvorrichtung eine Koppeleinrichtung, mit der die Greifvorrichtung an einen Roboter, insbesondere an einen Industrieroboter oder Roboterarm davon, koppelbar ist. Durch die Koppeleinrichtung lässt sich insbesondere eine formschlüssige Verbindung zwischen Roboter und Greifvorrichtung herstellen.

Durch diesen Aufbau der Greifvorrichtung wird erreicht, dass diese einen geringeren Platzbedarf hat. Die schwenkbewegliche Lagerung des Übersetzungselementes am ersten Greifelement führt dazu, dass bei einer Öffnung der Greifvorrichtung das Übersetzungselement derart ausweicht, dass dessen Erstreckung nach außen in eine zur Greiffläche des ersten Greifelementes vorzugsweise rechtwinklige Richtung zumindest bei der geöffneten Stellung reduziert ist. Das erlaubt die Anwendung der Greifvorrichtung auch bei solchen Maschinen, die in einem Bearbeitungsbereich, in dem zu bearbeitende Bauteile durch die Greifvorrichtung einzubringen und aus dem sie nach der Bearbeitung hervorzuholen sind, mit einem nur geringen Platzangebot. Insbesondere lassen sich die zu bearbeitenden Bauteile auch schräg gestellt in enge Bearbeitungsmaschinen wie Kantbänke einbringen.

Vorzugsweise ist das Übersetzungselement um eine erste Koppelschwenkachse schwenkbar an der Stellvorrichtung angeordnet. Die erste Koppelschwenkachse ist dabei insbesondere parallel zur ersten Greifelementschwenkachse. Somit ist das Übersetzungselement sowohl schwenkbar zum ersten Greifelement als auch schwenkbar zur Stellvorrichtung angeordnet, wobei durch die Stellvorrichtung eine Bewegung unmittelbar auf das Übersetzungselement eingeleitet werden kann. Durch diesen Aufbau ist nur eine Mindestzahl an Bauteilen zur Erreichung der vorbeschriebenen Vorteile notwendig, wodurch der zur Anwendung der Greifvorrichtung nötige Bauraum ebenso wie deren Anzahl verschleißbehafteter Bauteile reduziert ist.

Bevorzugt ist das Übersetzungselement schwenkbeweglich um eine erste Rahmenschwenkachse am Greifvorrichtungsrahmen gelagert. Die erste Rahmenschwenkachse ist dabei besonders bevorzugt parallel zur ersten Greifelementschwenkachse und/oder zur ersten Koppelschwenkachse angeordnet. Durch diese Lagerung des Übersetzungselementes am Greifvorrichtungsrahmen sind die im Betrieb von der Stellvorrichtung in das Übersetzungselement eingeleiteten Kräfte besser abgestützt und können insbesondere zumindest teilweise im Bereich eines Gleitlagers auf den Gleitvorrichtungsrahmen übertragen werden. Bei Verstellung des ersten Greifelementes schwenkt das Übersetzungselement insbesondere um die erste Rahmenschwenkachse, wobei eine zumindest anteilig radiale Bewegung der Stellvorrichtung in eine davon abweichende, zumindest anteilig radiale Bewegung des ersten Greifelementes übersetzt wird. Dadurch ist eine betriebssicher Lagerung des Übersetzungselementes durch eine unmittelbare Abstützung dessen am Greifvorrichtungsrahmen erreicht und somit deren Ausfallwahrscheinlichkeit reduziert.

In einer vorteilhaften Ausgestaltung der Erfindung hat die Greifvorrichtung ein Führungselement zur Ausbildung einer Parallelogrammführung. Das Führungselement ist dazu am ersten Greifelement um eine insbesondere zur ersten Greifelementschwenkachse parallele zweite Greifelementschwenkachse schwenkbar gelagert. Zusätzlich ist das Führungselement am Greifvorrichtungsrahmen um eine zweite Rahmenschwenkachse schwenkbar gelagert. Insbesondere ist der Abstand der ersten Greifelementschwenkachse zur ersten Rahmenschwenkachse gleich dem Abstand der zweiten Greifelementschwenkachse zur zweiten Rahmenschwenkachse. Dadurch ist erreicht, dass die Greifelemente unabhängig vom Abstand ihrer Greifflächen voneinander so orientiert sind, dass diese Greifflächen parallel zueinander sind. Dadurch wird erreicht, dass bei einer Öffnung der Greifvorrichtung innerhalb einer Bearbeitungsmaschine der Raumbedarf der Greifvorrichtung nur um ein Mindestmaß zunimmt. Des Weiteren ist eine etwaige weitere Führungsanordnung zur Führung des ersten Greifelementes entbehrlich und dadurch die Konstruktion deutlich vereinfacht. Für die Bewegung des ersten Greifelementes lassen sich ausschließlich zueinander schwenkbewegliche Bauteile verwenden, was den Verschleiß der Greifvorrichtung und damit deren Betriebskosten reduziert.

Durch die Parallelogrammführung ist erreicht, dass eine Bewegung des Aktors der Stellvorrichtung durch das Übersetzungselement in eine zumindest überwiegend abweichend davon gerichtete Bewegung des ersten Greifelementes übersetzt wird. Insbesondere wird somit eine zumindest im Wesentlichen lineare Bewegung des Aktors in Richtung zumindest eines der Greifelemente übersetzt in eine translatorische Bewegung des ersten Greifelementes, welches dabei, ohne an sich verschwenkt zu werden, abschnittsweise um die Rahmenschwenkachsen umläuft.

In einer alternativen bevorzugten Ausgestaltung der Erfindung sorgt die Parallelogrammführung bei einer Bewegung des ersten Greifelementes für eine geringfügige Verschwenkung derer relativ zueinander um höchstens 10°. Dadurch lässt sich insbesondere bei einer relativ zueinander verschwenkten Anordnung in der geöffneten Stellung mit einer größeren Positionstoleranz an die zu greifenden Bauteile heranfahren und somit ein unbeabsichtigter Kontakt der Greif-elemente mit dem Bauteil, bevor dieses geklemmt ist, vermieden werden.

Vorzugsweise ist ein zweites Greifelement im Betrieb relativ zum Greifvorrichtungsrahmen unbeweglich angeordnet. Insbesondere ist es daran starr fixiert. Bevorzugt ist das zweite Greifelement einteilig bzw. einstückig mit dem Greifvorrichtungsrahmen bzw. einem Bestandteil davon oder ein vom Greifvorrichtungsrahmen separates Element. Dadurch kann eine maximale Stabilität und dadurch Zuverlässigkeit der Greifvorrichtung realisiert werden. Außerdem führt die Bewegung lediglich eines Greifelementes beim Greifen zu einer Verringerung der Gefahr einer unbeabsichtigten Verschiebung des zu greifenden Bauteils.

Besonders bevorzugt ist das erste Übersetzungselement derart ausgebildet, dass das erste Greifelement im Betrieb in eine Offenstellung überführbar ist, in der die Greifvorrichtung insbesondere in der geöffneten Stellung ist. Bei Anordnung der ersten Greifelementes in der Offenstellung haben die Greifflächen einen Abstand von mindestens 25 mm, bevorzugt 35 mm, besonders bevorzugt 45 mm, und/oder einen Abstand von höchstens 100 mm, bevorzugt 70 mm, besonders bevorzugt 55 mm, voneinander. Insbesondere sind die erste Koppelschwenkachse sowie die erste Rahmenschwenkachse weiter als der genannte Abstand voneinander entfernt. Durch die Einstellung dieses Abstandes der Greifflächen in der Offenstellung ist zum einen erreicht, dass Metallbleche sämtlicher in der Industrie gängiger Stärken von der Greifvorrichtung gegriffen werden können. Außerdem ist erreicht, dass die Greifvorrichtung auch in der Offenstellung einen von den meisten Bearbeitungsmaschinen bereitgestellten Raum im Bearbeitungsbereich nicht überschreitet.

In einer vorteilhaften Ausgestaltung der Erfindung ist das Übersetzungselement zur Überführung des ersten Greifelementes von der Offenstellung in eine Schließstellung, in der die Greifflächen einen minimalen Abstand voneinander haben oder aneinander anliegen, relativ zum Greifvorrichtungsrahmen um 30° bis 135°, bevorzugt um 45° bis 90°, besonders bevorzugt um 50° bis 70°, schwenkbeweglich. Insbesondere zur Überführung des ersten Greifelementes von der Offenstellung in eine Stellung, in der die Greifvorrichtung ein Metallblech klemmt, wird das Übersetzungselement maximal um einen Winkel aus einem der genannten Bereiche verschwenkt. Dabei hat das Übersetzungselement einen besonders geringen Platzbedarf, wobei gleichwohl eine ausreichende Beabstandung der Greifelemente voneinander in der geöffneten Stellung der Greifvorrichtung sichergestellt werden kann. Das Übersetzungselement übersetzt eine durch die Stellvorrichtung ausgelöste Bewegung insbesondere eines Teils derer zunächst in eine Verschwenkung des Übersetzungselementes selbst, insbesondere relativ zum ersten Greifelement und/oder zum Greifvorrichtungsrahmen. Die Verschwenkung des Übersetzungselementes wird wiederum in eine Bewegung des ersten Greifelementes übersetzt, bei der das erste Greifelement insbesondere nicht verschwenkt wird und entlang einer insbesondere gekrümmten Bahn bewegt wird.

Insbesondere haben die erste Rahmenschwenkachse und die erste Greifelementschwenkachse einen geringeren Abstand voneinander, als die erste und die zweite Rahmenschwenkachse und/oder die erste und die zweite Greifelementschwenkachse. Durch diesen Aufbau, insbesondere den größeren Abstand der Greifelementschwenkachsen voneinander, wird trotz des kleinen Bauraums eine Parallelogrammführung auch zur Abstützung großer auf die Greifflächen wirkender Kräfte bereitgestellt, wobei eine etwa in Lagerspielen begründete, unbeabsichtigte Verschwenkung der Gleitflächen zueinander gering gehalten wird.

Vorzugsweise ist eine durch die erste Rahmenschwenkachse und die erste Greifelementschwenkachse des Übersetzungselementes aufgespannte Ebene relativ zu einer weiteren Ebene, die durch die erste Rahmenschwenkachse und die erste Koppelschwenkachse aufgespannt wird, um mindestens 45°, bevorzugt um mindestens 60°, besonders bevorzugt um mindestens 70°, verschwenkt angeordnet. Bei einer Betrachtung des Übersetzungselementes in Richtung der ersten Rahmenschwenkachse bilden dadurch die erste Rahmenschwenkachse, die erste Koppelschwenkachse und die erste Greifelementschwenkachse ein Dreieck aus und kann das Übersetzungselement aus dieser Perspektive V-förmig ausgebildet sein. Dadurch lässt sich das Übersetzungselement im Bereich dieser drei Achsen jeweils in kompakter Weise durch ein Schwenklager lagern. Dadurch wird auch die Langlebigkeit der Greifvorrichtung signifikant erhöht. Außerdem wird durch die Anordnung der genannten Achsen zueinander erreicht, dass die erfindungsgemäße Funktion auch dann zuverlässig erreicht wird, wenn die Stellvorrichtung sich platzsparend hauptsächlich in eine zu einer der Greifflächen parallele Richtung erstreckt und insbesondere auch eine translatorische Bewegung in diese Richtung erzeugt.

Bevorzugt umfasst die Stellvorrichtung ein einenends zu einer Stelleinheit schwenkbar um eine zweite Koppelschwenkachse gelagertes Koppelelement. Das Koppelelement ist anderenends schwenkbeweglich um die erste Koppelschwenkachse am Übersetzungselement gelagert. Das Koppelelement ist damit ein beidseitig schwenkbeweglich gelagertes Zwischenstück, das eine Übertragung einer linearen, translatorischen Bewegung der Stelleinheit, insbesondere parallel zu einer oder beiden Greifflächen, auf das schwenkbeweglich um die erste Rahmenschwenkachse gelagerte Übersetzungselement erlaubt, wobei die erste Koppelschwenkachse eine von der translatorischen Bewegung abweichende Bewegungskomponente hat. Dadurch können Bewegungsanteile der Schwenkbewegung des Übersetzungselementes in eine von der Verschiebungsrichtung der Stelleinheit abweichenden Richtung toleriert werden, ohne dass die Stelleinheit dazu beweglich oder verformbar sein muss. Dadurch ist die Zuverlässigkeit der Greifvorrichtung weiter erhöht.

Vorzugsweise ist die Greiffläche des zweiten Greifelementes in einer Anlageebene angeordnet. Im Betrieb hat die erste Koppelschwenkachse einen größeren Abstand von der Anlageebene als zumindest eine Rahmenschwenkachse und/oder einen kleineren Abstand als zumindest eine andere Rahmenschwenkachse. Insbesondere ist die erste Koppelschwenkachse ausgehend von der Anlageebene zwischen der ersten und der zweiten Rahmenschwenkachse positioniert, wobei sie je nach Stellung der Greifelemente zueinander und bei Betrachtung des Übersetzungselementes in Richtung der parallelen Rahmenschwenkachsen rechts oder links der Rahmenschwenkachsen oder unmittelbar dazwischen angeordnet ist. Insbesondere hat die erste Koppelschwenkachse keinesfalls einen geringeren Abstand von der Anlageebene als die erste Rahmenschwenkachse. Durch diese Ausbildung der Greifvorrichtung ist ein besonders kompakter Aufbau derer möglich. Die Stellvorrichtung überträgt ihre Bewegung auf das Übersetzungselement im ansonsten ungenutzten Raum zwischen den Rahmenschwenkachsen und insbesondere zumindest zeitweilig zwischen dem Führungselement und der Anlageebene auf das Übersetzungselement.

Besonders bevorzugt verläuft die erste Koppelschwenkachse bei der Überführung der Greifvorrichtung von der Offenstellung in die Schließstellung durch eine Rahmenschwenkachsenebene, die durch die erste und die zweite Rahmenschwenkachse aufgespannt wird und die insbesondere vertikal zur Anlageebene angeordnet ist.

Durch den Verlauf der ersten Koppelschwenkachse zwischen den beiden Rahmenschwenkachsen hindurch ist auch bei Bereitstellung eines ausreichenden Bewegungsspielraums der Greifelemente zueinander eine kleine Bauweise ermöglicht.

Insbesondere beträgt der Abstand der Greifflächen zueinander bei Anordnung der ersten Koppelschwenkachse in der Vertikalebene höchstens 30 mm, insbesondere zwischen 5 mm und 25 mm. Dieser Abstand entspricht der Stärke der meisten zu greifenden Metallbleche. Durch diese geometrische Ausgestaltung ist das Verhältnis von durch die Stellvorrichtung bzw. Stelleinheit bereitgestellten Bewegungen, insbesondere zumindest im Wesentlichen parallel zur Anlageebene, zur Bewegung der Greifflächen aufeinander zu insofern optimal, als dass die maximale Kraft auf die Greifelemente durch die Stellvorrichtung dann aufgebracht werden kann, wenn beide Greifflächen am zu greifenden Metallblech anliegen. Insbesondere ist die durch das Übersetzungselement gegebene Übersetzung am kleinsten, wenn die Greifflächen den vorbeschriebenen Abstand voneinander haben.

Vorzugsweise sind die Rahmenschwenkachsen von der Anlageebene um mindestens 5 mm, bevorzugt um mindestens 10 mm, besonders bevorzugt um mindestens 20 mm, von der Anlageebene beabstandet. Insbesondere ist die erste Rahmenschwenkachse zwischen der zweiten Rahmenschwenkachse und der Anlageebene angeordnet. Durch die Entfernung der Rahmenschwenkachsen von der Anlageebene ist ermöglicht, dass während der Überführung des ersten Greifelementes von der Offenstellung in die Schließstellung eine Zwischenstellung erreicht wird, in der eine, insbesondere die erste Greifelementschwenkachse und eine, insbesondere die erste Rahmenschwenkachse den gleichen Abstand von der Anlageebene haben. Ist das der Fall, ist eine Relativbewegung der Greifelemente zueinander rechtwinklig zur Anlageebene gerichtet und hat insbesondere keine oder eine zu vernachlässigende Bewegungskomponente in eine zur Anlageebene parallele Richtung. Die Zwischenstellung ist optimalerweise dann erreicht, wenn beide Greifflächen am zu greifenden Bauteil anliegen oder jeweils noch höchstens um 1 cm davon beabstandet sind. Durch die zumindest weitgehende Vermeidung einer Relativbewegung der Greifflächen zueinander in eine dazu parallele Richtung wird eine Verschiebung des Bauteils beim Greifen verhindert. Insbesondere wird beim Greifen mit der Greifvorrichtung zuerst das zweite Greifelement an das Bauteil, insbesondere das Metallblech angelegt und erst anschließend das erste Greifelement aus der Offenstellung auf das zweite Greifelement zubewegt, um Beim Greifen eine Bewegung des Bauteils relativ zum Greifvorrichtungsrahmen zu vermeiden.

In einer vorteilhaften Ausgestaltung der Erfindung umfasst die Stellvorrichtung, insbesondere die Stelleinheit, einen Elektromotor zur Einstellung zumindest eines Greifelementes. Insbesondere ist der Elektromotor in eine zur Anlageebene bzw. zu einer der Greifflächen parallele Richtung zumindest von dem ersten Greifelement beabstandet. Durch die Nutzung des Elektromotors lässt sich die Greifvorrichtung besonders kompakt ausführen.

Besonders bevorzugt umfasst die Stellvorrichtung, insbesondere die Stelleinheit, ein Spindelmutterelement sowie eine relativ dazu drehbare Gewindespindel. Die Gewindespindel ist insbesondere mit dem Elektromotor gekoppelt und bevorzugt mit der Antriebswelle des Elektromotors starr verbunden oder damit einteilig. Das Gewindespindelmutterelement ist bei Drehung der Gewindespindel insbesondere nicht umlaufend, sondern durch ein Innengewinde, das mit einem Außengewinde der Gewindespindel korrespondiert, darauf in Richtung der Rotationsachse der Gewindespindel verschieblich. Die Rotationsachse ist insbesondere um maximal 10° relativ zur Anlageebene verschwenkt und bevorzugt parallel zur Anlageebene angeordnet. Durch diesen Aufbau ist ein Bauraum der Greifvorrichtung, in eine zur Anlageebene vertikale Vertikalrichtung, auf ein Mindestmaß beschränkt und erstreckt sich die Stellvorrichtung hauptsächlich parallel zur Anlageebene. Die Rotationsachse ist insbesondere unbeweglich relativ zum Greifvorrichtungsrahmen. Alternativ ist die Rotationsachse bevorzugt schwenkbeweglich, wodurch auf das Koppelelement verzichtet werden kann, da die Stelleinheit einschließlich der Gewindespindel und dem Spindelmutterelement einer Bewegung des Übersetzungselementes bzw. der Koppelschwenkachse in eine zur Anlageebene nicht parallele Richtung folgt.

In einer vorteilhaften Ausgestaltung der Erfindung umfasst die Stellvorrichtung eine Steuerungseinheit, die zur Ausgabe einer insbesondere anhand eines am Elektromotor anliegenden Stroms berechneten Greifkraft ausgebildet ist. Durch die Berechnung der Greifkraft kann die Stellvorrichtung besonders flexibel und materialschonend auch bei weicheren Metallblechen eingesetzt werden, ohne dass dazu weitere konstruktive Bestandteile notwendig sind.

Zur Berechnung der Greifkraft werden insbesondere hinterlegte, geometrische Daten unter anderem des Übersetzungselementes genutzt. Der am Elektromotor anliegende Strom wird insbesondere von einem Controller der Steuerungseinheit überwacht, wobei durch eine Umrechnung des Stroms anhand einer Kalibrierkurve die Greifkraft berechnet wird. Bevorzugt hat der Strom bei einer Bewegung des ersten Greifelementes ohne Widerstand eine Stärke von 10 mA, wobei der Strom bei Anliegen eines Widerstandes, etwa bei Klemmen eines Metallblechs durch die Greifelemente, auf insbesondere zumindest 20 bis 50 mA ansteigt.

Bevorzugt umfasst die Stellvorrichtung eine Überwachungseinheit, die zur Ausgabe eines insbesondere anhand einer Gewindespindelposition und/oder einer Anzahl von Umdrehungen der Gewindespindel berechneten Abstandes der Greifflächen unterschiedlicher Greifelemente ausgebildet ist. Insbesondere umfasst die Stellvorrichtung dazu einen Drehwinkelsensor, der zum Messen von Winkeln größer 360° ausgebildet ist und/oder zur Zählung vollständiger Umdrehungen der Gewindespindel ausgebildet ist. Anhand der Gewindesteigungen sowie weiterer Geometrieparameter insbesondere betreffend das Übersetzungselement lässt sich anhand der Sensorwerte der Abstand der Greifflächen zueinander je nach Stellung der Stellvorrichtung berechnen. Die Funktion ist aufgrund dieser Ausbildung besonders platzsparend umgesetzt und eine Erhöhung des durch die Greifvorrichtung beanspruchten Bauraums vermieden. Durch diese Funktion kann im Vergleich zum Einsatz von Greifvorrichtungen gemäß dem Stand der Technik ein weiterer Arbeitsgang durch die Greifvorrichtung durchgeführt werden, wodurch eine separate Messvorrichtung nicht mehr nötig ist.

Vorzugsweise umfasst das erste Greifelement ein an dem Übersetzungselement angeordnetes Greifgrundelement und zumindest ein, vorzugsweise zwei lösbar am Greifgrundelement festgelegte Greifanlageelemente. Insbesondere ist das Greifgrundelement sowohl am Übersetzungselement als auch am Führungselement gelagert, wobei die Greifanlageelemente lösbar fixiert sind, ohne das Greifgrundelement von dem Übersetzungselement trennen zu müssen. Die Greifanlageelemente desselben Greifelementes bilden dabei gemeinsam eine ggf. nicht zusammenhängende Greiffläche aus.

Besonders bevorzugt hat die Greifvorrichtung eine Hebeeinrichtung mit mindestens einem Saugnapf und/oder einem Elektromagneten zum Anheben von Metallblechen bei lediglich einseitigem Kontakt der Greifvorrichtung dazu. Durch den zumindest einen Saugnapf oder Elektromagneten können auch solche Metallbleche angehoben werden, die nicht von den Greifelementen umgriffen werden können. In industriellen Prozessen kann somit insbesondere ein weiterer Arbeitsgang durch die Greifvorrichtung, der dem Greifen der Metallbleche vorausgeht, durch denselben Roboter vorgenommen werden.

Vorzugsweise ist die Hebeeinrichtung durch das zweite Greifelement mitausgebildet. Insbesondere erstreckt sich ein Leitungskanal zu einem Hebeelement durch das zweite Greifelement hindurch. Das Hebeelement übt dabei beim Heben eine Kraft auf das Metallblech aus und ist dabei insbesondere als der zumindest eine Saugnapf oder Elektromagnet ausgebildet. Der Leitungskanal dient bevorzugt zur Leitung eines Fluids, insbesondere von Luft zur Erzeugung eines Unterdruckes am Saugnapf. Alternativ oder zusätzlich verläuft durch den Leitungskanal bevorzugt zumindest ein elektrischer Leiter zur Versorgung des Elektromagneten mit Strom. Der Leitungskanal ist in dieser Ausgestaltung ein zumindest abschnittsweise entlang seines gesamten Umfanges vom zweiten Greifelement umgebener Hohlraum und verläuft insbesondere zumindest abschnittsweise im Wesentlichen parallel zur Anlageebene. Durch diese Ausbildung hat das zweite Greifelement neben der Greiffunktion eine Funktion als Bestandteil der Hebeeinrichtung, wodurch Bauraum für alternative, gesonderte Bauteil gespart wird. Die Anordnung des Leitungskanals innerhalb des zweiten Greifelementes sorgt für eine besonders kompakte Bauweise der Greifvorrichtung.

In einer vorteilhaften Ausgestaltung der Erfindung hat das erste Greifelement zwischen seiner Greiffläche und dem Greifvorrichtungsrahmen eine zu einem zweiten Greifelement hin offene Ausnehmung. Diese ist insbesondere in Richtung parallel zur ersten Greifelementschwenkachse durchgängig und hat insbesondere eine rechtwinklig zur Anlageebene gemessene Mindesthöhe von 10 mm, insbesondere von 20 mm. In der Offenstellung ist die Ausnehmung insbesondere offen zu einem Zwischenraum zwischen den beiden Greifelementen, hat jedoch auch bei Schließen der Greifvorrichtung bevorzugt eine konstante Größe. Durch die Ausnehmung ist es möglich, auch Metallbleche mit etwa gekanteten Randbereichen zu greifen und insbesondere die gekanteten Bereiche zu umgreifen, ohne sie beim Klemmen des Metallbleches zu beschädigen.

Vorzugsweise umfasst zumindest ein Greifelement ein lösbar befestigtes Greifflächenelement, das zumindest überwiegend aus Kunststoff, insbesondere GFK, ausgebildet ist und die Greiffläche des Greifelementes zumindest mit ausbildet. Das Greifflächenelement ist somit dem jeweils anderen Greifelement zugewandt und liegt insbesondere in der Schließstellung am zu greifenden Metallblech an. Insbesondere wird zumindest eine gesamte Greiffläche durch das Greifflächenelement ausgebildet. Durch das Greifflächenelement werden gegriffene Metallbleche geschont und ist die Greifvorrichtung dadurch besonders langlebig, dass die stark verschleißbehafteten Teile der Greifelemente ausgetauscht werden können.

Die Aufgabe der Erfindung wird weiterhin durch einen Industrieroboter gelöst, der zumindest eine vorbeschriebene Greifvorrichtung aufweist. Insbesondere weist der Industrieroboter zwei vorbeschriebene Greifvorrichtungen insbesondere zum Greifen desselben Bleches auf.

Weitere Einzelheiten und Vorteile der Erfindung sind den nachfolgend beschriebenen, schematisch dargestellten Ausführungsbeispielen zu entnehmen; es zeigen:
- Fig. 1: eine Übersichtsdarstellung einer erfindungsgemäßen Greifvorrichtung bei nur teilweiser Darstellung der Stellvorrichtung,
- Fig. 2: eine Seitenansicht der Greifvorrichtung gemäß Fig. 1 in einer Schließstellung,
- Fig. 3: eine Seitenansicht der Greifvorrichtung gemäß Fig. 1 in einer Offenstellung,
- Fig. 4: eine Übersichtsdarstellung eines erfindungsgemäßen Industrieroboters mit einer erfindungsgemäßen Greifvorrichtung,
- Fig. 5: eine Übersichtsdarstellung der Greifvorrichtung am Industrieroboter gemäß Fig. 4.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

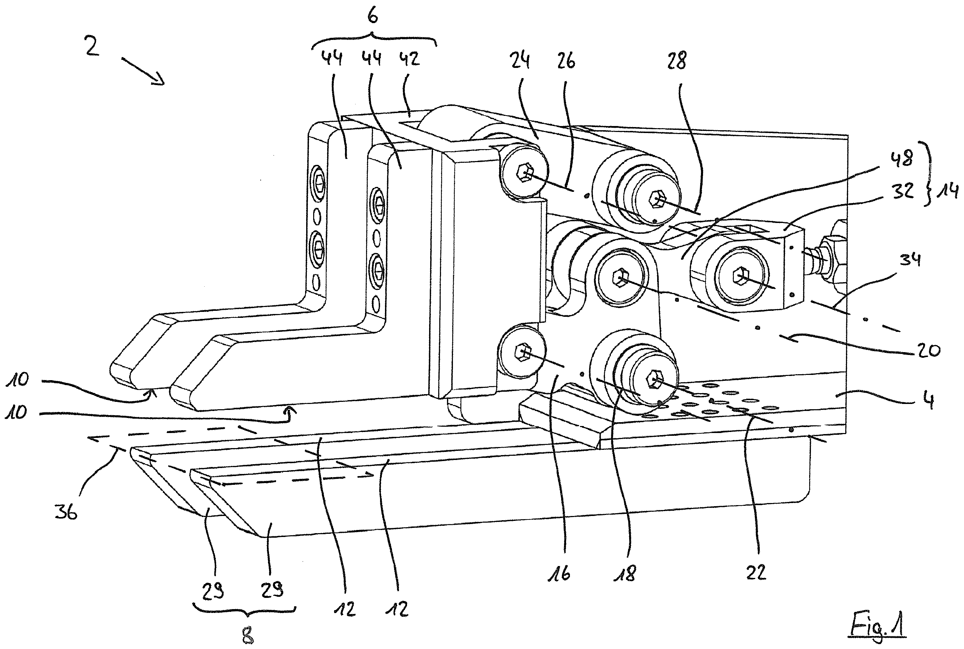

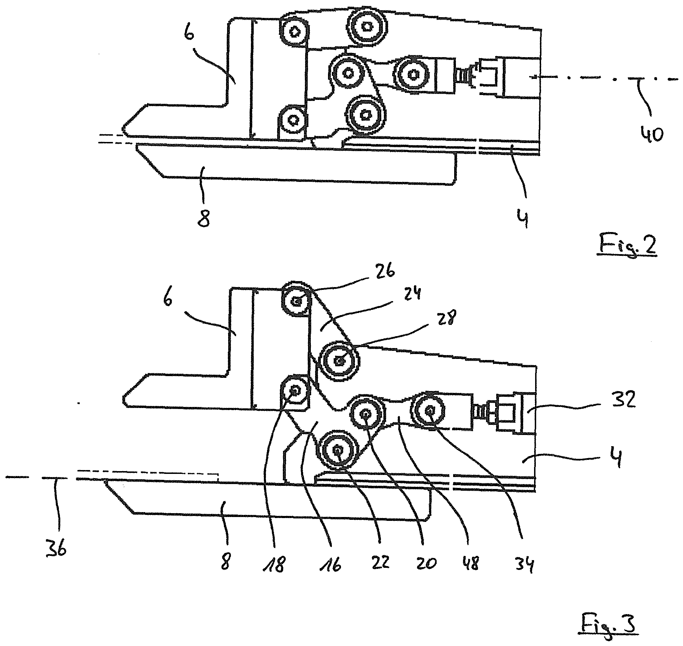

Fig. 1 zeigt eine Greifvorrichtung 2 zum Greifen von nicht dargestellten Metallblechen, wobei ebenso wie durch die Fig. 2 und 3 eine Seitenverkleidung des Greifvorrichtungsrahmens nicht dargestellt wird. Die Greifvorrichtung 2 hat einen Greifvorrichtungsrahmen 4 und zwei relativ zueinander beweglich gelagerte Greifelemente 6, 8. Außerdem hat die Greifvorrichtung 2 eine in den Fig. 1 bis 3 nur teilweise dargestellte Stellvorrichtung 14, die im Betrieb einen Abstand von einander zugewandten und sich insbesondere im Wesentlichen parallel zu erstreckenden Greifflächen 10, 12 der Greifelemente 6, 8 einstellt. Die Stellvorrichtung 14 ist an einem Übersetzungselement 16 angeordnet, das an einem ersten Greifelement 6 und um eine erste Greifelementschwenkachse 18 schwenkbar gelagert ist.

Das Übersetzungselement 16 ist weiterhin um eine erste Koppelschwenkachse 20 schwenkbar an der Stellvorrichtung 14 angeordnet. Insbesondere ist das Übersetzungselement 16 an einem Koppelelement 48 der Stellvorrichtung 14 angeordnet. Das Übersetzungselement 16 ist darüber hinaus schwenkbeweglich um eine erste Rahmenschwenkachse 22 am Greifvorrichtungsrahmen 4 gelagert.

Die Greifvorrichtung 2 hat ein Führungselement 24 zur Ausbildung einer Parallelogrammführung. Das Führungselement 24 ist am ersten Greifelement 6 um eine zur ersten Greifelementschwenkachse 18 parallele zweite Greifelementschwenkachse 26 schwenkbar gelagert. Das Führungselement 24 ist zudem am Greifvorrichtungsrahmen 4 um eine zweite Rahmenschwenkachse 28, die parallel zur ersten Rahmenschwenkachse 22 angeordnet ist, schwenkbar gelagert. Dadurch sind unabhängig von einer Position des ersten Greifelementes 6 relativ zum zweiten Greifelement 8 die Greifflächen 10, 12 des ersten und des zweiten Greifelementes 6, 8 immer parallel.

Das zweite Greifelement 8 ist im Betrieb relativ zum Greifvorrichtungsrahmen 4 unbeweglich angeordnet. Das zweite Greifelement 8 ist ausgebildet durch zwei Greifelementteile 29, die jeweils eine dem ersten Greifelement 6 zugewandte Oberfläche haben, die gemeinsam die Greiffläche 12 des zweiten Greifelementes 8 ausbilden. Das erste Greifelement 6 hat ein Greifgrundelement 42 und zwei lösbar am Greifgrundelement 42 festgelegte Greifanlageelemente 44. Die Greifanlageelemente 44 bilden gemeinsam die Greiffläche 10 des ersten Greifelementes 6 aus.

Das Übersetzungselement 16 ist derart ausgebildet, dass das erste Greifelement 6 im Betrieb in eine Offenstellung (vergl. Fig. 3) überführbar ist, in der die Greifflächen 10, 12 einen Abstand von mehr als 45 mm voneinander haben. Von der Offenstellung ist das erste Greifelement 6 in eine Schließstellung (vergl. Fig. 2) überführbar, wozu das Übersetzungselement 16 relativ zum Greifvorrichtungsrahmen 4 um 50° bis 70° verschwenkt wird.

Die erste Rahmenschwenkachse 22 und die erste Greifelementschwenkachse 18 des Übersetzungselementes 16 spannen eine gedachte Ebene auf, die relativ zu einer weiteren gedachten Ebene, die durch die erste Rahmenschwenkachse 22 und die erste Koppelschwenkachse 20 aufgespannt wird, um mindestens 70° verschwenkt angeordnet.

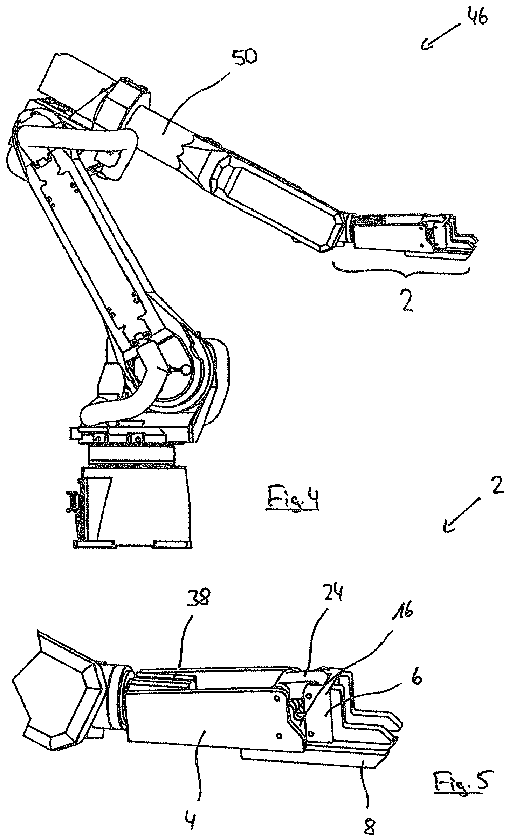

Die Greiffläche 12 des zweiten Greifelementes 8 liegt in einer Anlageebene 36, die ebenso wie das zweite Greifelement 8 ortsfest relativ zum Greifvorrichtungsrahmen 4 angeordnet ist. Im Betrieb hat die erste Koppelschwenkachse 20 einen größeren Abstand von der Anlageebene 36 als die erste Rahmenschwenkachse 22. Zusätzlich hat die erste Koppelschwenkachse 20 einen kleineren Abstand von der Anlageebene 36 als die zweite Rahmenschwenkachse 28. Dadurch befindet sich die erste Koppelschwenkachse 20, ebenso wie eine zweite Koppelschwenkachse 34, im Betrieb zumindest teilweise zwischen beiden Rahmenschwenkachsen 22, 28, die jeweils um mindestens 10 mm von der Anlageebene 36 beabstandet sind. Die Stelleinheit 32 der Stellvorrichtung 14 hat einen Elektromotor 38 zur Einstellung des ersten Greifelementes 6 (vergl. Fig. 5). Die Stelleinheit 32 umfasst zudem eine vom Elektromotor 38 drehbare Gewindespindel sowie ein Gewindespindelmutterelement mit einem zum Gewinde der Gewindespindel korrespondierenden Innengewinde, das sich im Betrieb translatorisch auf der Gewindespindel bewegt. Eine Rotationsachse 40 der Gewindespindel (vergl. Fig. 2) ist parallel zur Anlageebene 36 angeordnet.

Die Stellvorrichtung 2 umfasst eine Steuerungseinheit zur Berechnung einer Greifkraft anhand eines am Elektromotor 38 anliegenden Stroms. Die Stellvorrichtung umfasst weiterhin eine Überwachungseinheit zur Ausgabe eines insbesondere anhand der Gewindespindelposition und/oder einer Anzahl von Umdrehungen der Gewindespindel berechneten Abstandes Greifflächen 10, 12 unterschiedlicher Greifelemente 6, 8.

Fig. 4 zeigt einen Industrieroboter 46 mit einer Greifvorrichtung 2. Die Greifvorrichtung ist dergestalt an einen Roboterarm 50 gekoppelt, dass sie relativ zu einem Roboterarm drehbar um eine Drehachse und schwenkbar um eine davon abweichende Schwenkachse ist.

## Patentansprüche

1. Greifvorrichtung (2) zum Greifen von Metallblechen, umfassend einen Greifvorrichtungsrahmen (4), zumindest zwei relativ zueinander beweglich gelagerte Greifelemente (6, 8) sowie eine im Betrieb einen Abstand von einander zugewandten und sich insbesondere zumindest im Wesentlichen parallel zueinander erstreckenden Greifflächen (10, 12) der Greifelemente (6, 8) einstellende Stellvorrichtung (14), **dadurch gekennzeichnet, dass** die Stellvorrichtung (14) an einem Übersetzungselement (16) angeordnet ist, das an einem ersten Greifelement (6) um eine erste Greifelementschwenkachse (18) schwenkbar gelagert ist.

2. Greifvorrichtung nach Anspruch 1, **dadurch gekennzeichnet, dass** das Übersetzungselement (16) um eine erste Koppelschwenkachse (20) schwenkbar an der Stellvorrichtung (14) angeordnet ist.

3. Greifvorrichtung nach Anspruch 1 oder 2, **dadurch gekennzeichnet, dass** das Übersetzungselement (16) schwenkbeweglich um eine erste Rahmenschwenkachse (22) am Greifvorrichtungsrahmen (4) gelagert ist.

4. Greifvorrichtung nach Anspruch 3, **gekennzeichnet durch** ein Führungselement (24) zur Ausbildung einer Parallelogrammführung, das am ersten Greifelement (6) um eine insbesondere zur ersten Greifelementschwenkachse (18) parallele zweite Greifelementschwenkachse (26) schwenkbar und am Greifvorrichtungsrahmen (4) um eine zweite Rahmenschwenkachse (28) schwenkbar gelagert ist.

5. Greifvorrichtung nach einem der vorhergehenden Ansprüche, **dadurch gekennzeichnet, dass** ein zweites Greifelement (8) im Betrieb relativ zum Greifvorrichtungsrahmen (4) unbeweglich angeordnet ist.

6. Greifvorrichtung nach einem der vorhergehenden Ansprüche, **dadurch gekennzeichnet, dass** das Übersetzungselement (16) derart ausgebildet ist, dass das erste Greifelement (6) im Betrieb in eine Offenstellung überführbar ist, in der die Greifflächen (10, 12) einen Abstand von mindestens 25 mm, bevorzugt 35 mm, besonders bevorzugt 45 mm, voneinander haben und/oder einen Abstand von höchstens 100 mm, bevorzugt 70 mm, besonders bevorzugt 55 mm, voneinander haben.

7. Greifvorrichtung nach einem der vorhergehenden Ansprüche, **dadurch gekennzeichnet, dass** das Übersetzungselement (16) zur Überführung des ersten Greifelementes (6) von einer Offenstellung in eine Schließstellung, in der die Greifflächen (10, 12) einen minimalen Abstand voneinander haben oder aneinander anliegen, relativ zum Greifvorrichtungsrahmen (4) um 30° bis 135°, bevorzugt 45° bis 90°, besonders bevorzugt 50° bis 70°, schwenkbeweglich ist.

8. Greifvorrichtung nach einem der vorhergehenden Ansprüche, unter Einschluss von Anspruch 2 und Anspruch 3, **dadurch gekennzeichnet, dass** eine durch die erste Rahmenschwenkachse (22) und die erste Greifelementschwenkachse (18) des Übersetzungselementes (16) aufgespannte Ebene relativ zu einer durch die erste Rahmenschwenkachse (22) und die erste Koppelschwenkachse (20) aufgespannten Ebene um mindestens 45°, bevorzugt mindestens 60°, besonders bevorzugt mindestens 70°, verschwenkt angeordnet ist.

9. Greifvorrichtung nach einem der vorhergehenden Ansprüche, unter Einschluss von Anspruch 2, **dadurch gekennzeichnet, dass** die Stellvorrichtung ein einenends zu einer Stelleinheit (32) schwenkbar um eine zweite Koppelschwenkachse (34) gelagertes Koppelelement (48) umfasst, das anderenends schwenkbeweglich um die erste Koppelschwenkachse (20) am Übersetzungselement (16) gelagert ist.

10. Greifvorrichtung nach einem der vorhergehenden Ansprüche, unter Einschluss von Anspruch 2, **dadurch gekennzeichnet, dass** die Greiffläche (12) des zweiten Greifelementes (8) in einer Anlageebene (36) angeordnet ist und im Betrieb die erste Koppelschwenkachse (20) einen größeren Abstand von der Anlageebene (36) hat als zumindest eine Rahmenschwenkachse (22, 28) und/oder einen kleineren Abstand hat als zumindest eine andere Rahmenschwenkachse (22, 28).

11. Greifvorrichtung nach einem der vorhergehenden Ansprüche, unter Einschluss von Anspruch 2 und Anspruch 3, **dadurch gekennzeichnet, dass** bei Anordnung der ersten Koppelschwenkachse (20) in einer die Anlageebene (36) rechtwinklig schneidenden Vertikalebene, in der die erste Rahmenschwenkachse (22) angeordnet ist, der Abstand der Greifflächen (10, 12) höchstens 30 mm, insbesondere zwischen 5 mm und 25, mm beträgt.

12. Greifvorrichtung nach einem der vorhergehenden Ansprüche, unter Einschluss von Anspruch 4, **dadurch gekennzeichnet, dass** die Rahmenschwenkachsen (22, 28) von der Anlageebene (36) um mindestens 5, bevorzugt um mindestens 10 mm, besonders bevorzugt um mindestens 20 mm, beabstandet sind.

13. Greifvorrichtung nach einem der vorhergehenden Ansprüche, **dadurch gekennzeichnet, dass** die Stellvorrichtung (14), insbesondere die Stelleinheit (32), einen Elektromotor (38) zur Einstellung zumindest eines Greifelementes (6, 8) umfasst.

14. Greifvorrichtung nach Anspruch 13, **dadurch gekennzeichnet, dass** die Stellvorrichtung (14) eine Steuerungseinheit umfasst, die zur Ausgabe einer insbesondere anhand eines am Elektromotor (38) anliegenden Stroms berechneten Greifkraft ausgebildet ist.

15. Greifvorrichtung nach einem der vorhergehenden Ansprüche, **dadurch gekennzeichnet, dass** die Stellvorrichtung (14), insbesondere die Stelleinheit (32), ein auf einer relativ dazu drehbaren Gewindespindel angeordnetes Spindelmutterelement umfasst, deren Rotationsachse (40) insbesondere um maximal 10° relativ zur Anlageebene (36) verschwenkbar ist, insbesondere dazu parallel angeordnet ist.

16. Greifvorrichtung nach einem der vorhergehenden Ansprüche, **dadurch gekennzeichnet, dass** die Stellvorrichtung (14) eine zur Ausgabe eines insbesondere anhand der Spindelposition und/oder einer Anzahl vom Umdrehungen der Spindel berechneten Abstandes der Greifflächen (10, 12) unterschiedlicher Greifelemente (6, 8) ausgebildete Überwachungseinheit umfasst.

17. Greifvorrichtung nach einem der vorhergehenden Ansprüche, **dadurch gekennzeichnet, dass** das erste Greifelement (6) ein an dem Übersetzungselement (16) angeordnetes Greifgrundelement (42) und zumindest ein, vorzugsweise zwei lösbar am Greifgrundelement (42) festgelegte Greifanlageelemente (44) umfasst.

18. Greifvorrichtung nach einem der vorhergehenden Ansprüche, **gekennzeichnet durch** eine Hebeeinrichtung mit mindestens einem Saugnapf und/oder einem Elektromagneten zum Anheben von Metallblechen bei lediglich einseitigem Kontakt der Greifvorrichtung (2) dazu.

19. Greifvorrichtung nach Anspruch 18, **dadurch gekennzeichnet, dass** die Hebeeinrichtung durch das zweite Greifelement (8) zumindest mitausgebildet ist und sich ein Leitungskanal zu einem Hebeelement insbesondere durch das zweite Greifelement hindurcherstreckt.

20. Greifvorrichtung nach einem der vorhergehenden Ansprüche, **dadurch gekennzeichnet, dass** das erste Greifelement (6) zwischen seiner Greiffläche (10) und dem Greifvorrichtungsrahmen (4) eine zu einem zweiten Greifelement (8) hin offene Ausnehmung aufweist, die insbesondere in Richtung parallel zur ersten Greifelementschwenkachse (18) durchgängig ist und insbesondere eine rechtwinklig zur Anlageebene (36) gemessene Mindesthöhe von 10 mm, insbesondere von 20 mm, hat.

21. Greifvorrichtung nach einem der vorhergehenden Ansprüche, **dadurch gekennzeichnet, dass** zumindest eines der Greifelemente (6, 8) ein lösbar befestigtes Greifflächenelement umfasst, das zumindest überwiegend aus Kunststoff, insbesondere GFK, ausgebildet ist und die Greiffläche (10, 12) des Greifelementes (6, 8) zumindest mitausbildet.

22. Industrieroboter (46) mit zumindest einer, insbesondere zwei Greifvorrichtungen (2) nach einem der vorhergehenden Ansprüche.
